# EUROPÄISCHE PATENTANMELDUNG

(11) **EP 0 572 947 A2**
(43) Veröffentlichungstag der Anmeldung: **08.12.1993**
(21) Anmeldenummer: 93108682.1
(22) Anmeldetag: 28.05.1993
(51) Int. Cl.: A61C 19/00, A61C 5/00

(54) **Verwendung eines lichtdurchlässigen elastischen Hohlkörpers als Hilfsmittel bei der Aushärtung von lichthärtenden Zahnfüllungsmassen**

(30) Priorität: 30.05.1992 DE 4217932
(71) Anmelder: Mander, Hans Werner, Dr., W-8221 Traunwalden (DE)
(72) Erfinder: Mander, Hans Werner, Dr., W-8221 Traunwalden (DE)
(74) Vertreter: Müller, Bernhard, Dr. H. Schmidt & B. Müller Patentanwälte

(57) **Zusammenfassung**

Es wird die Verwendung eines lichtdurchlässigen, elastischen Hohlkörpers als Hilfsmittel bei der Aushärtung von lichthärtenden Zahnfüllungsmassen beschrieben. Als elastische Hohlkörper werden vorzugsweise Gelatinekapseln verwendet.

## Beschreibung

Die Erfindung betrifft die Verwendung eines lichtdurchlässigen, elastischen Hohlkörpers als Hilfsmittel bei der Aushärtung von lichthärtenden Zahnfüllungsmassen.

Bei der Aushärtung von lichthärtenden Zahnfüllungsmassen im Mund konnte bei der herkömmlichen Verfahrensweise die Füllung nur in Gegenwart von Sauerstoff und ohne Druckeinwirkung ausgehärtet werden. Dies führte häufig zu einer verminderten Qualität der Füllungsoberfläche sowie zu Blasenbildungen und Spaltbildungen im Randbereich. Eine Druckausübung kam deshalb nicht in Frage, weil gleichzeitig die Lichtquelle zur Durchführung der Photohärtung einwirken mußte.

Um diese Schwierigkeiten zu überwinden, gibt es auf dem Markt einen Stempel aus durchsichtigem Silikonkunststoff, der mit einem Stempelhalter auf den Zahnbereich aufgedrückt wird (vergl. Firmenschrift PMX-Occlusalstempel, Dr. D. Schumacher, Beselerstrasse 2, 2370 Rendsburg). Aufgrund der Lichtdurchlässigkeit der Silikonmasse kann gleichzeitig eine Belichtung mit dem Leuchtstab vorgenommen werden. Nachteilig an dieser Vorgehensweise ist der relativ hohe Preis der Silikonstempel. Diese müssen entweder nach einmaliger Verwendung verworfen oder aber einer relativ komplizierten Sterilisation unterworfen werden. Außerdem läßt die Lichtdurchlässigkeit dieser relativ dicken Silikonstempel im gewünschten Wellenlängenbereich zu wünschen übrig. Ein weiterer Nachteil ist darin zu sehen, daß eine weitere Gerätschaft (Stempelhalter) auf dem Zahnarzt-Tray zu plazieren ist, was aus Platzgründen in der Regel unerwünscht ist.

Aufgabe der Erfindung ist es, einen elastischen Körper bereitzustellen, der auf einfache und billige Weise herzustellen ist und der ohne Schwierigkeiten auf eine Zahnfüllung appliziert werden kann und dabei sowohl eine gleichmäßige Druckausübung auf die Zahnfüllung gestattet und eine effektive Lichtaushärtung ermöglicht. Dabei soll die Notwendigkeit des Einsatzes eines speziellen Halters entfallen.

Zur Lösung dieser Aufgabe wird ein lichtdurchlässiger, elastischer Hohlkörper bereitgestellt, der als Hilfsmittel bei der Aushärtung von lichthärtenden Zahnfüllungsmassen Verwendung finden kann.

Die hohle Beschaffenheit des erfindungsgemäß eingesetzten, Körpers gewährleistet eine besonders gute Anpassung an die räumlichen Gegebenheiten am Zahn und ermöglicht im Vergleich zu den herkömmlichen massiven Stempeln auch eine höhere Lichtausbeute für den Aushärtungsvorgang.

Der erfindungsgemäß verwendete Hohlkörper ermöglicht es, auf die aushärtende Füllungsmasse einen gleichmäßigen Druck auszuüben, wobei gleichzeitig für einen weitgehenden Sauerstoffausschluß gesorgt wird.

Gleichzeitig kann durch den Hohlkörper hindurch eine Lichtquelle auf die lichthärtende Füllungsmasse gerichtet werden. Somit wird die Aushärtung unter gleichzeitiger Druckausübung ermöglicht.

Selbstverständlich kann der Hohlkörper auch zusammen mit nicht lichthärtenden Füllungsmassen, z.B. mit Glasionomerzementen, eingesetzt werden.

Als derartige lichtdurchlässige, elastische Körper kommen insbesondere Gelatinekapseln in Frage. Die Größe der Gelatinekapsel wird vorzugsweise an die zu erwartende Füllungsgröße angepasst. Beispielsweise kommen Kapseln mit einer Länge von etwa 0,5 bis 2 cm und einer Breite von 3 bis 8 mm in Frage. Die Schichtdicke der Kapseln wird vorzugsweise so gewählt, daß eine gute und gleichmäßige Druckausübung möglich ist und andererseits die Kapsel eine gewisse Stabilität zur Anpassung an die anatomischen Gegebenheiten der Zahnoberfläche bietet und auch den nötigen Druck, sei es den Druck, der vom Zahnarzt ausgeübt wird, oder den Druck beim eventuellen Zubeißen durch den Patienten, aushält.

Die länglichen Kapseln werden vorzugsweise in Längsrichtung auf die fertigzustellende Zahnfüllung aufgelegt, so daß die Druckausübung in radialer Richtung zur Kapsel erfolgt. Selbstverständlich ist es aber auch möglich, die Kapsel hochgestellt oder in schräger Position auf die Zahnfüllung aufzusetzen, falls es die räumlichen Gegebenheiten als zweckmäßig erscheinen lassen.

Die Kapsel ist mit einem fluiden Medium gefüllt. Beispielsweise kommt die Füllung mit Luft oder mit Inertgas in Frage. Ferner kommt auch eine Füllung der Kapseln mit physiologisch verträglichen Medien, wie isotonischer Kochsalzlösung, Ringer-Lösung und dergl. in Frage.

Kapseln aus Gelatine sind deswegen besonders bevorzugt, weil sie eine ausreichende Lichtdurchlässigkeit gewährleisten, physiologisch unbedenklich sind und nach der Verwendung problemlos entsorgt werden können. Ferner sind derartige Kapseln auf dem Markt in verschiedensten Formen erhältlich und kostengünstig, so daß ihre einmalige Verwendung die Methode der Wahl darstellt. Selbstverständlich kann die Kapsel aber beim gleichen Patienten zur Herstellung mehrerer Füllungen verwendet werden.

Es kommt auch die Verwendung von anderen Kunststoffen in Frage, sofern sie die erforderliche Lichtdurchlässigkeit und Elastizität aufweisen und auch vom physiologischen Standpunkt aus unbedenklich sind.

Zweckmäßigerweise wird die Kapsel mit einer ohnehin auf dem Zahnarzt-Tray befindlichen Pinzette aufgenommen und auf die fertigzustellende Füllung aufgedrückt. Gleichzeitig kann die Lichthärtung unter Einsatz eines üblichen Belichtungsgerätes, vorgenommen werden, was den Vorteil hat, daß die Härtung unter Druck und im wesentlichen unter Sauerstoffausschluß erfolgen kann.

## Patentansprüche

1. Verwendung eines lichtdurchlässigen, elastischen Hohlkörpers als Hilfsmittel bei der Aushärtung von lichthärtenden Zahnfüllungsmassen.

2. Verwendung nach Anspruch 1, dadurch gekennzeichnet, daß als elastischer Hohlkörper eine Gelatinekapsel eingesetzt wird.
